(19) Europäisches Patentamt / European Patent Office / Office européen des brevets

(11) **EP 2 906 434 B1**

(12) **FASCICULE DE BREVET EUROPEEN**

(45) Date de publication et mention
de la délivrance du brevet:
**19.12.2018   Bulletin 2018/51**

(21) Numéro de dépôt: **13780325.0**

(22) Date de dépôt: **11.10.2013**

(51) Int Cl.:
**B60C 17/00** (2006.01)     **B60C 9/00** (2006.01)
**B60C 9/08** (2006.01)      **D02G 3/48** (2006.01)
**B60C 9/04** (2006.01)

(86) Numéro de dépôt international:
**PCT/EP2013/071260**

(87) Numéro de publication internationale:
**WO 2014/057082 (17.04.2014 Gazette 2014/16)**

(54) **PNEUMATIQUE ADAPTÉ POUR UN ROULAGE À PLAT COMPRENANT NAPPE DE CARCASSE HYBRIDE**

NOTLAUFREIFEN MIT EINER HYBRIDKARKASSENLAGE

RUNFLAT TIRE COMPRISING A HYBRID CARCASS LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2012   FR 1259756**

(43) Date de publication de la demande:
**19.08.2015   Bulletin 2015/34**

(73) Titulaire: **Compagnie Générale des Etablissements Michelin
63000 Clermont-Ferrand (FR)**

(72) Inventeurs:
• **VALLET, Solenne
F-63040 Clermont-Ferrand Cedex 9 (FR)**

• **LEFEBVRE, Serge
F-63040 Clermont-Ferrand Cedex 9 (FR)**
• **DENOUEIX, Jean-Yves
F-63040 Clermont-Ferrand Cedex 9 (FR)**
• **GUILLAUMAIN, Jérémy
F-63040 Clermont-Ferrand Cedex 9 (FR)**

(74) Mandataire: **Desbordes, Guillaume
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**EP-A1- 2 055 817        EP-A1- 2 233 318
EP-A2- 1 745 945        GB-A- 2 003 525
JP-A- 2012 148 661**

**Description**

L'invention concerne un pneumatique adapté pour le roulage à plat.

Depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Une solution envisagée est l'utilisation de pneumatiques adaptés pour un roulage à plat et pourvus de flancs autoporteurs, (parfois désignés par les appellations commerciales en langue anglaise « ZP » pour « zéro pressure » ou « SST » pour « self supporting tire »).

On connait de l'état de la technique un pneumatique adapté pour un roulage à plat comportant un sommet comprenant une armature de sommet, formée de deux nappes de sommet d'éléments de renfort et surmontée d'une bande de roulement. Deux flancs prolongent le sommet radialement vers l'intérieur. Ces flancs sont renforcés au moyen d'inserts en caoutchouc permettant de supporter une charge à pression réduite, voire sans pression.

Le pneumatique comporte en outre deux bourrelets comprenant chacun une tringle ainsi qu'une armature de carcasse s'étendant depuis les bourrelets à travers les flancs vers le sommet et comportant deux nappes de carcasse d'éléments de renfort. L'une des nappes de carcasse est ancrée à chacun des bourrelets par un retournement autour de la tringle et l'autre nappe carcasse s'arrête radialement à l'extérieur de la tringle. Les deux nappes de carcasse comprennent des éléments de renfort textile en rayonne.

Lorsque la pression de gonflage est significativement abaissée par rapport à la pression de service, voire même nulle (on parle alors de mode « roulage à plat »), le pneumatique doit permettre de rouler une distance donnée à une vitesse donnée. Cette performance, dite performance « RME » (Roulage Mode Etendu), est requise par la législation ou par les constructeurs automobiles pour permettre au manufacturier de présenter le pneumatique comme adapté pour le roulage à plat.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

Toutefois, les flancs autoporteurs induisent des pertes élevées de performances RMG, notamment par rapport à un pneumatique standard non pourvu de flancs autoporteurs. En particulier, la masse de ces inserts conduit à une augmentation de la masse totale du pneumatique. En outre, l'ajout de ces inserts conduit inévitablement à une augmentation de l'hystérèse et donc à une augmentation de la résistance au roulement. De plus, ces inserts augmentent la rigidité des flancs du pneumatique ce qui réduit le confort du pneumatique.

Un exemple de pneumatique adapté pour un roulage à plat est connu de EP1745945.

L'invention a pour objet un pneumatique adapté pour un roulage à plat assurant la performance RME requise et présentant des performances RMG les plus proches possible d'un pneumatique standard non pourvus de flancs autoporteurs.

A cet effet, l'invention a pour objet un pneumatique adapté pour un roulage à plat pourvu de flancs autoporteurs et comprenant une armature de carcasse comprenant au moins un élément de renfort comprenant au moins un (c'est-à-dire un ou plusieurs) brin multifilamentaire en aramide et au moins un (c'est-à-dire un ou plusieurs) brin multifilamentaire en polyester retordus ensemble.

L'élément de renfort hybride aramide/polyester permet d'utiliser les propriétés différentes mais complémentaires de chaque matériau. En effet, l'élément de renfort présente un module relativement faible aux faibles déformations (en mode roulage normal), en l'espèce celui du polyester, qui s'avère suffisant pour assurer les performances RMG. L'élément de renfort présente un module relativement élevé aux fortes déformations (en mode roulage à plat), en l'espèce celui de l'aramide, qui s'avère suffisant pour assurer, à lui seul, la performance RME.

L'utilisation combinée de l'aramide et du polyester permet de réduire le diamètre de l'élément de renfort grâce à une meilleure ténacité de la combinaison aramide/polyester que celle de la rayonne seule qui présente une force à rupture équivalente mais pour un titre élevé et donc un diamètre relativement grand. Ainsi, on nécessite une quantité de gomme moindre pour calandrer les éléments de renfort hybrides aramide/polyester par rapport à des éléments de renfort en rayonne. La réduction de masse de gomme permet de réduire le coût, la masse mais également l'hystérèse et donc la résistance au roulement du pneumatique.

En outre, l'invention permet de s'affranchir de la rayonne ce qui est souhaitable pour des raisons environnementales et de coûts.

En effet, de préférence, le diamètre de l'élément de renfort est inférieur ou égal à 1,1 mm et plus préférentiellement à 0,7 mm.

L'élément de renfort est également appelé retors. Chaque brin multifilamentaire est également appelé surtors et comprend une pluralité de filaments élémentaires ou monofilaments éventuellement entremêlés les uns avec les autres. Chaque brins comprend entre 50 et 2000 monofilaments.

Par filament en aramide, on rappelle de manière bien connue qu'il s'agit d'un filament de macromolécules linéaires formées de groupes aromatiques liés entre eux par des liaisons amides dont au moins 85 % sont directement liées à deux noyaux aromatiques, et plus particulièrement de fibres en poly(p-phénylène téréphtalamide) (ou PPTA), fabriquées depuis fort longtemps à partir de compositions de filage optiquement anisotropes.

Par filament en polyester, on rappelle de manière bien connue qu'il s'agit d'un filament de macromolécules linéaires formées de groupes liés entre eux pas des liaisons esters. Les polyesters sont fabriqués par polycondensation par estérification entre un diacide carboxylique ou de l'un de ses dérivés un diol. Par exemple, le polyéthylène téréphtalate peut être fabriqué par polycondensation de l'acide téréphtalique et de l'éthylène glycol.

De préférence, les pneumatiques peuvent être destinés à des véhicules à moteur du type tourisme, 4x4, "SUV" (Sport Utility Vehicles).

Avantageusement, l'armature de carcasse comprend une seule nappe de carcasse.

L'utilisation combinée de l'aramide et du polyester permet d'obtenir une nappe de carcasse présentant des propriétés de résistance mécanique, notamment de force rupture, équivalentes voire supérieures, à celles de deux nappes de carcasse en rayonne. De plus, en réduisant le nombre de nappes de carcasse, on réduit le coût, la masse mais également l'hystérèse et donc la résistance au roulement du pneumatique.

La présence d'une seule nappe de carcasse permet d'obtenir un pneumatique dont l'armature de carcasse est plus souple qu'un pneumatique dont l'armature de carcasse comprend deux nappes de carcasse. Ainsi, on réduit la raideur verticale du pneumatique et on améliore le confort de ce dernier, le rapprochant ainsi du confort d'un pneumatique standard dépourvu de flancs autoporteurs.

De façon optionnelle, le pneumatique comprend deux bourrelets comportant chacun au moins une structure annulaire de renfort, l'armature de carcasse étant ancrée dans chacun des bourrelets par un retournement autour de la structure annulaire de renfort.

Avantageusement, le pneumatique comprend un insert de flanc disposé axialement à l'intérieur de l'armature de carcasse.

Selon certaines caractéristiques optionnelles du pneumatique :

- Le titre du brin multifilamentaire en aramide est compris entre 100 et 400 tex bornes incluses, de préférence entre 140 et 210 tex bornes incluses.
- Le titre du brin multifilamentaire en polyester est compris entre 100 et 500 tex bornes incluses, de préférence entre 100 et 170 tex bornes incluses.
- Le rapport du titre du brin multifilamentaire en aramide sur le titre du brin multifilamentaire en polyester est compris entre 0,2 et 4, de préférence entre 1 et 1,3.

Selon d'autres caractéristiques optionnelles du pneumatique :

- La torsion du brin multifilamentaire en aramide est comprise entre 250 et 450 tours par mètre bornes incluses, de préférence entre 340 et 420 tours par mètre bornes incluses.
- La torsion du brin multifilamentaire en polyester est comprise entre 250 et 450 tours par mètre bornes incluses, de préférence entre 340 et 420 tours par mètre bornes incluses.

La torsion de chaque brin est suffisamment élevée pour que l'élément de renfort soit suffisamment endurant. La torsion est également suffisamment réduite pour obtenir un module élevé et donc améliorer la performance RME du pneumatique.

Par torsion du brin multifilamentaire, on entend la torsion que l'on donne à chaque brin multifilamentaire lors de l'étape d'assemblage finale d'au moins les deux brins multifilamentaires ensemble pour former le retors formant l'élément de renfort.

- Les filaments élémentaires constitutifs du brin multifilamentaire en aramide sont retordus selon un facteur de torsion compris entre 65 et 240 bornes incluses, de préférence entre 105 et 160 bornes incluses.
- Les filaments élémentaires constitutifs du brin multifilamentaire en polyester sont retordus selon un facteur de torsion compris entre 65 et 240 bornes incluses, de préférence entre 90 et 150 bornes incluses.

On rappelle ici que, dans un élément de renfort, le facteur de torsion d'un brin multifilamentaire (plus exactement, des filaments élémentaires constitutifs dudit brin) s'exprime selon la relation qui suit :

$$K = (\text{Torsion en tours/mètre}) \times [(\text{Titre du brin (en tex)} / (1000.\rho)]^{1/2}$$

dans laquelle la torsion du brin multifilamentaire est exprimée en tours par mètre d'élément de renfort, le titre du brin est exprimé en tex (poids en gramme de 1000 mètres de brin), et enfin p est la densité ou masse volumique (en g/cm³) du matériau constitutif du brin (environ 1,44 pour aramide, 1,25 à 1,40 pour les polyesters et 1,38 pour le PET).

Selon d'autres caractéristiques optionnelles du pneumatique :

- Le module initial en extension de l'élément de renfort, mesuré à 20°C, est supérieur ou égal à 5,5 cN/tex, de préférence compris entre 6,5 et 7,9 cN/tex bornes incluses. Un tel module initial permet, en mode roulage normal dans lequel les déformations sont les plus faibles, d'obtenir un élément de renfort présentant une résistance mécanique élevée, en l'espèce celle du polyester. De plus, le comportement du pneumatique est amélioré, notamment les performances de guidage du pneumatique. Un tel module permet également de limiter la déformation du pneumatique à l'état cru lors de sa mise en place dans le moule avant sa cuisson.
- Le module final en extension de l'élément de renfort, mesuré à 20°C, est supérieur ou égal à 10 cN/tex, de préférence compris entre 13,5 et 16,5 cN/tex bornes incluses. Un tel module permet, en mode roulage à plat dans lequel les déformations sont les plus importantes, d'obtenir un élément de renfort présentant une résistance mécanique élevée, en l'espèce celle de l'aramide. Ce module final permet également de compenser la perte de résistance mécanique due à la dégradation du polyester pour ces déformations qui interviennent généralement à des hautes températures.
- Le rapport du module final en extension de l'élément de renfort sur le module initial en extension de l'élément de renfort, mesurés à 20°C, est inférieur ou égal à 3, de préférence compris entre 1,7 et 2,5 bornes incluses.
- Le module initial en extension de l'élément de renfort, mesuré à 180°C, est supérieur ou égal à 1,5 cN/tex, de préférence compris entre 1,9 et 2,3 cN/tex bornes incluses.
- La force à rupture de l'élément de renfort est supérieure ou égale à 20 daN, de préférence supérieure ou égale à 25 daN, et plus préférentiellement supérieure ou égale à 30 daN. Plus la force à rupture est élevée, meilleure est sa résistance aux agressions de type « road hazard » comprenant notamment les nids de poule et les chocs de trottoir. Une telle force à rupture permet donc d'obtenir un pneumatique présentant une résistance élevée aux agressions de type « road hazard ».
- La contraction thermique de l'élément de renfort après 2 minutes à 185°C, sous une prétension de 0,5 cN/tex, est inférieure ou égale à 1,2 %. Une telle contraction thermique permet d'obtenir une valeur de l'allongement à la rupture relativement élevée pour un élément de renfort aramide/polyester. Le pneumatique est donc moins sensibles aux agressions de type « road hazard ».
- En variante, la contraction thermique de l'élément de renfort après 2 minutes à 185°C, sous une prétension de 0,5 cN/tex, est supérieure à 1,2 %. Une telle contraction thermique permet d'obtenir un module initial plus élevé et donc une résistance mécanique aux faibles sollicitations plus grande.

Toutes les propriétés mécaniques énoncées ci-dessus sont bien connues de l'homme du métier, et pour la plupart, déduites des courbes force-allongement.

De préférence, l'élément de renfort comprend un seul brin multifilamentaire en aramide et un seul brin multifilamentaire en polyester. Un tel élément de renfort permet de conférer au pneumatique d'excellentes performances RME et RMG. En effet, grâce à ses deux brins multifilamentaires, on limite la taille de l'élément de renfort et donc le poids et la résistance au roulement du pneumatique.

De préférence, chaque brin est enroulé en hélice autour de l'autre.

Avantageusement, le polyester est choisi parmi le polyéthylène téréphtalate (PET), le polyéthylène naphthalate (PEN), le polybutylène téréphtalate (PBT), le polybutylène naphthalate (PBN), le polypropylène téréphtalate (PPT) ou le polypropylène naphthalate (PPN), de préférence le polyester est du polyéthylène téréphtalate (PET).

L'invention sera mieux comprise à la lecture de la description qui va suivre, donnée uniquement à titre d'exemple non limitatif et faite en se référant aux dessins dans lesquels:

- la figure 1 est une vue en coupe radiale d'un pneumatique adapté pour un roulage à plat selon un premier mode de réalisation de l'invention;
- la figure 2 illustre une vue de détails d'un élément de renfort du pneumatique de la figure 1 ;
- la figure 3 est une vue analogue à celle de la figure 1 d'un pneumatique selon un deuxième mode de réalisation ; et
- la figure 4 représente des courbes force-allongement de différents éléments de renfort.

Dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point A qu'il est « radialement intérieur » à un point B (ou « radialement à l'intérieur » du point B) s'il est plus près de l'axe de rotation du pneumatique que le point B. Inversement, un point C est dit « radialement extérieur à » un point D (ou « radialement à l'extérieur » du point D) s'il est plus éloigné de l'axe de rotation du pneumatique que le point D. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Enfin, par « coupe radiale » ou « section radiale » on entend ici une coupe ou une section selon un plan qui comporte l'axe de rotation du pneumatique.

Une direction « axiale » est une direction parallèle à l'axe de rotation du pneumatique. Un point E est dit « axialement intérieur » à un point F (ou «axialement à l'intérieur » du point F) s'il est plus près du plan médian du pneumatique que le point F. Inversement, un point G est dit « axialement extérieur à » un point H (ou « axialement à l'extérieur » du point H) s'il est plus éloigné du plan médian du pneumatique que le point H.

Le « plan médian » du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

## EXEMPLES DE PNEUMATIQUE SELON L'INVENTION

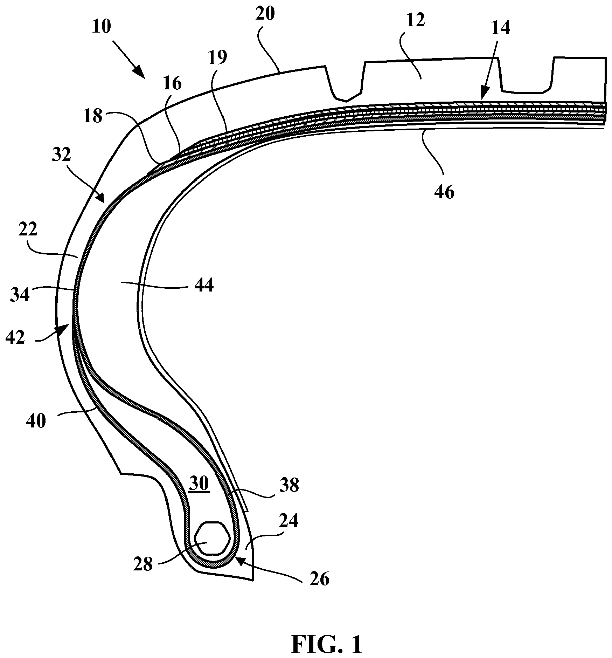

On a représenté schématiquement sur la figure 1, vue en coupe radiale, un pneumatique selon un premier mode de réalisation de l'invention désigné par la référence générale 10. Le pneumatique 10 est du type pour roulage à plat. Le pneumatique 10 est pour véhicule de tourisme.

Ce pneumatique 10 comporte un sommet 12 comprenant une armature de sommet 14, formée de deux nappes de sommet d'éléments de renfort 16, 18 et d'une nappe de frettage 19. L'armature de sommet 14 est surmontée d'une bande de roulement 20. Ici, la nappe de frettage 19 est disposée radialement extérieure aux nappes 16, 18, entre les nappes 16, 18 et la bande de roulement 20. Deux flancs autoporteurs 22 prolongent le sommet 12 radialement vers l'intérieur.

Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage sur tringle, ainsi qu'une armature de carcasse radiale 32.

L'armature de carcasse 32 comporte de préférence une seule nappe de carcasse 34 d'éléments de renfort 36, la nappe 34 étant ancrée à chacun des bourrelets 24 par un retournement autour de la tringle 28, de manière à former dans chaque bourrelet 24 un brin aller 38 s'étendant depuis les bourrelets à travers les flancs vers le sommet, et un brin retour 40, l'extrémité radialement extérieure 42 du brin retour 40 étant sensiblement à mi-hauteur du pneumatique. L'armature de carcasse 32 s'étend depuis les bourrelets 24 à travers les flancs 22 vers le sommet 12.

Les compositions de caoutchouc utilisées pour les nappes de sommet 16, 18 et de carcasse 34 sont des compositions conventionnelles pour calandrage d'éléments de renfort, typiquement à base de caoutchouc naturel, de noir de carbone, d'un système de vulcanisation et des additifs usuels. Lorsque les éléments de renfort sont textiles, en particulier ici dans l'armature de carcasse, l'adhésion entre l'élément de renfort textile et la composition de caoutchouc qui l'enrobe est assurée par exemple par une colle usuelle du type RFL.

Le pneumatique 10 comporte encore deux inserts de flanc 44, axialement intérieurs à l'armature de carcasse 32. Ces inserts 44 avec leur section radiale caractéristique en forme de croissant sont destinés à renforcer le flanc. Ils comprennent au moins une composition polymérique, de préférence un mélange caoutchouteux. Le document WO 02/096677 donne plusieurs exemples de mélanges caoutchouteux pouvant être utilisés pour former un tel insert. Chaque insert de flanc 44 est susceptible de contribuer à supporter une charge correspondant à une partie du poids du véhicule lors d'une situation de roulage à plat.

Le pneumatique comprend également une couche interne 46 d'étanchéité, de préférence en butyl, située axialement intérieure aux flancs 22 et radialement intérieure à l'armature de sommet 14 et s'étendant entre les deux bourrelets 24. Les inserts de flanc 44 sont situés axialement extérieurs à la couche interne 46. Ainsi, les inserts de flanc 44 sont disposés axialement entre l'armature de carcasse 32 et la couche interne 46.

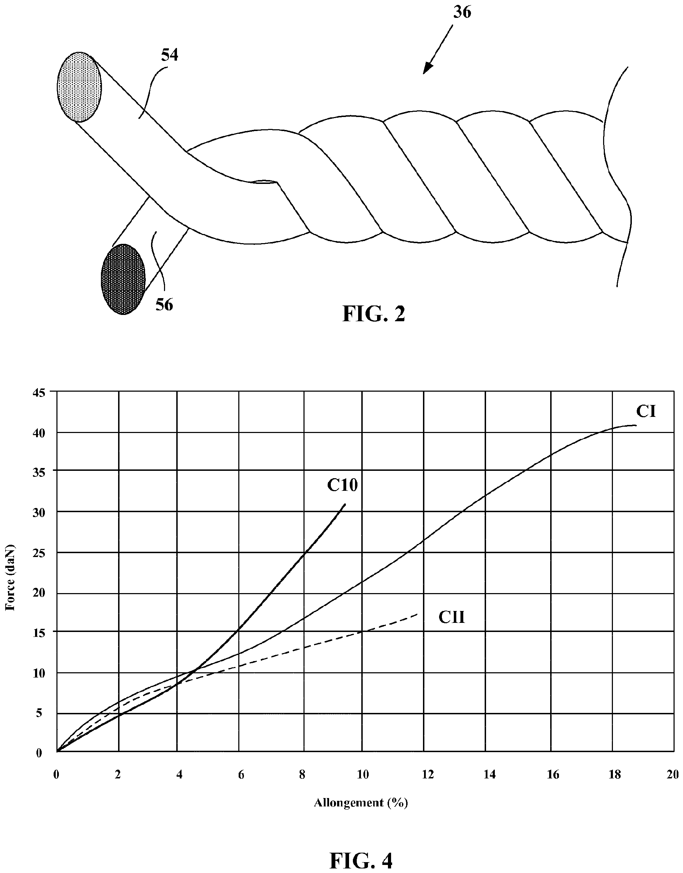

La nappe de carcasse 34 comprend des éléments de renforts textiles 36 dont un est illustré sur la figure 2. Les éléments de renforts 36 sont parallèles les uns aux autres. Chaque élément de renfort 36 est radial. En d'autres termes, chaque élément de renfort 36 s'étend dans un plan sensiblement parallèle à la direction axiale du pneumatique 10.

Chaque élément de renfort 36 comprend un brin multifilamentaire 54 en aramide, ici un seul brin, et un brin multifilamentaire 56 en polyester, ici un seul brin, qui sont surtordus individuellement à 380 tours/mètre puis retordus ensemble à 380 tours/mètre. Les deux brins sont enroulés en hélice l'un autour de l'autre.

Le polyester est choisi parmi le polyéthylène téréphtalate, le polyéthylène naphtalate, le polybutylène téréphthalate, le polybutylène naphtalate, le polypropylène téréphthalate ou le polypropylène naphtalate. En l'espèce, le polyester est du polyéthylène téréphtalate (PET).

Le titre du brin multifilamentaire 54 en aramide est compris entre 100 et 400 tex bornes incluses, de préférence entre 140 et 210 tex bornes incluses. Ici, le titre du brin multifilamentaire 54 en aramide est égal à 167 tex.

Le titre du brin multifilamentaire 56 en polyester est compris entre 100 et 500 tex bornes incluses, de préférence entre 100 et 170 tex bornes incluses. Ici, le titre du brin multifilamentaire 56 en polyester est égal à 144 tex.

Le rapport du titre du brin multifilamentaire 54 en aramide sur le titre du brin multifilamentaire 56 en polyester est compris entre 0,2 et 4, de préférence entre 1 et 1,3 et ici égal à 1,16.

La torsion du brin multifilamentaire 54 en aramide est comprise entre 250 et 450 tours par mètre bornes incluses, de préférence entre 340 et 420 tours par mètre bornes incluses. Ici, la torsion du brin multifilamentaire 54 en aramide est égale à 380 tours par mètres.

La torsion du brin multifilamentaire 56 en polyester est comprise entre 250 et 450 tours par mètre bornes incluses, de préférence entre 340 et 420 tours par mètre bornes incluses. Ici, la torsion du brin multifilamentaire 56 en polyester est égale à 380 tours par mètres.

L'élément de renfort présente donc des brins présentant sensiblement la même torsion. Il s'agit d'un élément de renfort équilibré en torsion.

Les filaments élémentaires constitutifs du brin multifilamentaire 54 en aramide sont retordus selon un facteur de torsion $K1$ compris entre 65 et 240 bornes incluses, de préférence entre 105 et 160 bornes incluses. Ici, $K1=129$.

Les filaments élémentaires constitutifs du brin multifilamentaire 56 en polyester sont retordus selon un facteur de torsion $K2$ compris entre 105 et 160 bornes incluses, de préférence entre 90 et 150 bornes incluses. Ici, $K2=123$.

Le rapport $K1/K2$ entre les facteurs de torsions est avantageusement compris entre 0,9 et 1,10 bornes incluses.

Le module initial $Mi20$ en extension de l'élément de renfort 36, mesuré à 20°C, est supérieur ou égal à 5,5 cN/tex, de préférence compris entre 6,5 et 7,9 cN/tex bornes incluses. Ici, $Mi20=7,2$ cN/tex.

Le module final $Mf20$ en extension de l'élément de renfort 36, mesuré à 20°C, est supérieur ou égal à 10 cN/tex, de préférence compris entre 13,5 et 16,5 cN/tex bornes incluses. Ici, $Mf20= 15$ cN/tex.

Le rapport du module final $Mf20$ sur le module initial $Mi20$, mesurés à 20°C, est inférieur ou égal à 3, de préférence compris entre 1,7 et 2,5 bornes incluses. Ici $Mf20/Mi20=2,1$.

Le module initial $Mi180$ en extension de l'élément de renfort, mesuré à 180°C, est supérieur ou égal à 1,5 cN/tex, de préférence compris entre 1,9 et 2,3 cN/tex bornes incluses. Ici, $Mi180= 2,1$ cN/tex.

La force à rupture de l'élément de renfort 36 est supérieure ou égale à 20 daN, de préférence supérieure ou égale à 25 daN, et plus préférentiellement supérieure ou égale à 30 daN. Ici, $Fr=34$ daN.

La contraction thermique $CT$ de l'élément de renfort 36 après 2 minutes à 185°C, sous une prétension de 0,5 cN/tex, est inférieure ou égale à 1,2 %. Ici, $CT=0,8$%.

Les valeurs décrites ci-dessus sont mesurées sur des éléments de renfort directement fabriqués ou bien extraits de nappes de renfort. En variante, la valeurs décrites ci-dessus sont mesurées sur des éléments de renfort extraits d'un pneumatique.

Pour la fabrication par retordage des éléments de renfort 36, on rappellera ici simplement, de manière bien connue de l'homme du métier, que chaque brin constitutif de l'élément de renfort final est tout d'abord individuellement tordu sur lui-même dans une direction donnée (par exemple torsion en Z de 380 tours par mètre de brin) au cours d'une première étape pour former un surtors, puis que les brins ainsi tordus sur eux-mêmes sont ensuite retordus ensemble en sens inverse (par exemple torsion en S de 380 tours par mètre de d'élément de renfort) pour former un retors, ici l'élément de renfort final 36.

On a représenté sur la figure 3, un pneumatique selon un deuxième mode de réalisation de l'invention. Les éléments analogues à ceux du premier mode de réalisation sont désignés par des références identiques.

A la différence au pneumatique 10 du premier mode de réalisation, le pneumatique 10 selon le deuxième mode de réalisation est du type à brin retour raccourci. L'extrémité radialement extérieure 42 du brin retour 40 est radialement à l'intérieur de l'extrémité 48 radialement la plus à l'extérieur du bourrelet 24 de la partie 50 du bourrelet 24 destinée à prendre appui sur le crochet de jante.

## MESURES ET TESTS COMPARATIFS

On a comparé dans le tableau 1 des caractéristiques de l'élément de renfort 36 du pneumatique 10 selon l'invention et d'éléments de renfort d'autres pneumatiques.

Le pneumatique 10 est conforme à l'invention et tel que décrit ci-dessus.

Le pneumatique I est du type standard non pourvu de flancs autoporteurs et comprend une armature de carcasse comprenant une seule nappe de carcasse. La nappe de carcasse comprend des éléments de renfort textiles. Chaque élément de renfort comprend deux brins multifilamentaires en PET retordus ensemble.

Le pneumatique II est adapté pour un roulage à plat et comprend une armature de carcasse comprenant deux nappes de carcasse. Chaque nappe de carcasse comprend des éléments de renfort textiles. Chaque élément de renfort comprend deux brins multifilamentaires en rayonne retordus ensemble.

Toutes les propriétés mécaniques indiquées sont mesurées sur des éléments de renfort textiles encollés (c'est-à-dire prêts à l'emploi, ou bien extraits du pneumatique qu'ils renforcent) ayant été soumis à un conditionnement préalable ; par "conditionnement préalable", on entend le stockage des câblés (après séchage) pendant au moins 24 heures, avant mesure, dans une atmosphère standard selon la norme européenne DIN EN 20139 (température de 20 ± 2°C ; hygrométrie de 65 ± 2 %).

Le titre (ou densité linéique) des brins élémentaires ou des éléments de renfort est déterminé sur au moins deux échantillons, chacun correspondant à une longueur d'au moins 5 m, par pesée de cette longueur ; le titre est donné en tex (poids en grammes de 1000 m de produit - rappel: 0, 111 tex égal à 1 denier).

Les propriétés mécaniques sont mesurées de manière connue à l'aide d'une machine de traction « INSTRON » munie de pinces « 4D ». Les échantillons testés subissent une traction sur une longueur initiale de 400 mm à une vitesse nominale de 200 mm/min, sous une prétension standard de 0,5 cN/tex. Tous les résultats donnés sont une moyenne de 5 mesures.

Les mesures de force à rupture et d'allongement à rupture (allongement total en %) sont effectuées en traction selon la norme ISO 6892 de 1984 permettant également d'obtenir les courbes Force-Allongement.

Le module initial est défini comme la pente à l'origine de la partie linéaire de la courbe Force-Allongement qui intervient juste après une prétension standard de 0,5 cN/tex. Le module final est défini comme la pente au point correspondant à 80% de la force à rupture de la courbe Force-Allongement.

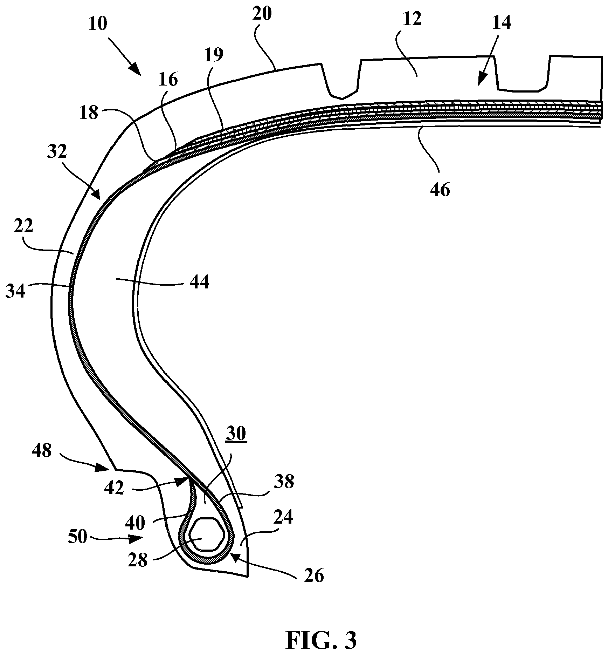

On a représenté sur la figure 4 les courbes Force-Allongement CI, CII et C10 de différents pneumatiques I, II de l'état de la technique et du pneumatique 10 selon l'invention.

**Tableau 1**

| Pneumatique | I | II | 10 |
|---|---|---|---|
| Courbe Force-Allongement | CI | CII | C10 |
| Nature des brins | PET/PET | Rayonne/Rayonne | Aramide/PET |
| Titres des brins (tex) | 334/334 | 184/184 | 167/144 |
| Torsions des brins (tours/m) | 270/270 | 480/480 | 380/380 |
| Diamètre (mm) | 0,96 | 0,68 | 0,65 |
| Facteur de torsion K1 | 133 | 170 | 129 |
| Facteur de torsion K2 | 133 | 170 | 123 |
| Force à rupture (daN) | 40 | 17 | 34 |
| Contraction thermique à 185°C (%) | 0,8 | 0 | 0,8 |
| Module initial à 20 °C (cN/tex) | 5,1 | 7,2 | 7,2 |
| Module final à 20 °C (cN/tex) | NA | NA | 15 |
| Température de transition vitreuse (°C) | 110 | NA | NA/110 |
| Température de fusion (°C) | 260 | NA | NA/260 |
| Température de dégradation (°C) | ~ 350 | ~ 350 | ~ 450/~ 350 |

La mention NA (pour non applicable) indique que la valeur n'existe pas ou n'a pas de signification.

Le PET est commercialisé par la société Performance Fibers sous la dénomination 1X50. La rayonne est commercialisée par la société Cordenka sous la dénomination Super 3 - T700. Enfin, l'aramide est commercialisée par la société Teijin sous la dénomination Twaron 1000.

Le PET présente une température de fusion relativement basse ce qui lui confère une mauvaise stabilité thermique contrairement à la rayonne ou à l'aramide qui n'ont pas ou peu de sensibilité thermique. Ainsi, en mode roulage à plat, c'est-à-dire lorsque la température est élevée (en raison de l'échauffement lié à la perte de pression), le PET se dégrade très rapidement et n'assure plus sa fonction de renfort. Au contraire, l'aramide, en raison de sa grande stabilité thermique, assure sa fonction de renfort même à haute température.

La figure 4 montre que l'élément de renfort 36 (courbe C10) présente une force à rupture et une rigidité aux fortes déformations supérieures à celle de l'élément de renfort en rayonne (courbe CII). De plus, l'élément de renfort 36 (courbe C10) présente une rigidité aux fortes déformations supérieure à celle de l'élément de renfort en PET (courbe CI). Ainsi, en mode roulage à plat, l'élément de renfort 36 permet d'apporter une rigidité structurelle supérieure que celle des renforts en PET et en rayonne, notamment dans une zone joignant le sommet et les flancs du pneumatique, dite zone épaule, et dans une zone du flanc proche du bourrelet, dite zone basse. Ainsi, l'élément de renfort en rayonne confère au pneumatique 10 une meilleure performance RME que le pneumatique II.

On a comparé dans le tableau 2 les performances RMG et la performance RME des pneumatiques I, II et 10.

Masse du pneumatique

La valeur de la masse est indiquée en unité relative (base 100) par rapport à la masse du pneumatique I de l'état de la technique. La valeur est d'autant plus inférieure à 100 que la masse est supérieure à celle du pneumatique I de l'état de la technique.

Résistance au roulement

La résistance au roulement est mesurée, après une étape de stabilisation thermique, à partir de la mesure de la décélération d'une roue pourvue du pneumatique testé appliquée contre un volant de test. La charge appliquée est égale à 85% de la charge ETRTO (« European Tyre and Rim Technical Organisation »).

La valeur de la résistance au roulement est indiquée en unité relative (base 100) par rapport à la résistance au roulement du pneumatique I de l'état de la technique. La valeur est d'autant plus inférieure à 100 que la résistance au roulement est élevée par rapport à celle du pneumatique I de l'état de la technique.

Confort

Le confort est déterminé à partir d'une mesure de fermeté verticale. La mesure de fermeté verticale est réalisée sur une roue comprenant un moyeu dynamométrique sur laquelle est monté le pneumatique testé. La roue est appliquée contre un volant de test sous une charge égale 80% de la charge ETRTO. Le volant comprend une barrette formant un obstacle. On détermine la fermeté verticale du pneumatique à partir de la force mesurée par le moyeu dynamométrique. Plus la force est élevée, plus la fermeté verticale est grande, moins bonne est la perception du confort.

La valeur de fermeté verticale est indiquée en unité relative (base 100) par rapport à la fermeté verticale du pneumatique I de l'état de la technique. La valeur est d'autant plus proche de 100 que la fermeté verticale est faible par rapport à celui du pneumatique I de l'état de la technique et donc le confort meilleur.

Test de roulage à plat

Le test de roulage à plat est effectué conformément au règlement 30 UNECE. La valeur 0 indique que le pneumatique testé a échoué au test de roulage à plat. La valeur 1 indique que le pneumatique testé a passé avec succès le test de roulage à plat.

**Tableau 2**

| Pneumatique | I | II | 10 |
|---|---|---|---|
| Masse du pneumatique | 100 | 73 | 80 |
| Résistance au roulement | 100 | 94 | 98 |
| Amortissement | 100 | 92 | 95 |
| Test de roulage à plat | 0 | 1 | 1 |

Les résultats du tableau 2 indiquent que le pneumatique 10 selon l'invention assure la performance RME requise (valeur 1 pour le test de roulage à plat) et présente, parmi les pneumatiques adaptés pour un roulage à plat (pneumatiques II et 10), les performances RMG les plus proches du pneumatique standard I. Bien que présentant des performances RMG inférieures à celles du pneumatique standard I, le pneumatique 10 selon l'invention présente des performances RMG supérieures à celles du pneumatique II.

L'invention ne se limite pas aux modes de réalisation précédemment décrits.

En effet, l'armature de carcasse 32 du pneumatique pourra comprendre deux nappes de carcasse 34.

On pourra également prévoir un mode de réalisation dans lequel le brin retour 40 remonte entre la nappe de sommet 18 et le brin aller 38.

On pourra aussi prévoir un mode de réalisation dans lequel l'armature de carcasse comprend un élément de renfort auxiliaire s'étendant entre le bourrelet 24 et le sommet 12 du pneumatique. Cet élément de renfort auxiliaire est intercalé entre les brins aller 38 et retour 40 et remonte entre la nappe de sommet 18 et le brin aller 38.

Ces deux modes de réalisation précédents sont particulièrement avantageux dans le cas où le pneumatique comprend une unique nappe de carcasse, le brin retour 40 ou l'élément de renfort auxiliaire assurant un renforcement supplémentaire dans la zone de l'épaule du pneumatique.

En outre, chaque brin multifilamentaire pourra avoir une torsion différente de celle de l'autre ou des autres brins multifilamentaires de façon à obtenir un élément de renfort déséquilibré en torsion.

On pourra également combiner les caractéristiques des différents modes de réalisation décrits ou envisagés ci-dessus sous réserve que celles-ci soient compatibles entre elles sans sortir du cadre défini par les revendications ci-jointes.

## Revendications

1. Pneumatique (10) adapté pour un roulage à plat pourvu de flancs autoporteurs, comprenant une armature de carcasse (32), **caractérisé en ce que** l'armature de carcasse (32) comprend au moins un élément de renfort (36) comprenant au moins un brin multifilamentaire (54) en aramide et au moins un brin multifilamentaire (56) en polyester retordus ensemble.

2. Pneumatique (10) selon la revendication précédente, dans lequel l'armature de carcasse (32) comprend une seule nappe de carcasse (34).

3. Pneumatique (10) selon l'une quelconque des revendications précédentes, comprenant deux bourrelets (24) comportant chacun au moins une structure annulaire de renfort (26), l'armature de carcasse (32) étant ancrée dans chacun des bourrelets (24) par un retournement autour de la structure annulaire de renfort (26).

4. Pneumatique (10) selon l'une quelconque des revendications précédentes, comprenant un insert de flanc (44) disposé axialement à l'intérieur de l'armature de carcasse (32).

5. Pneumatique (10) selon l'une quelconque des revendications précédentes, dans lequel les filaments élémentaires constitutifs du brin multifilamentaire (54) en aramide sont retordus selon un facteur de torsion compris entre 65 et 240 bornes incluses, de préférence entre 105 et 160 bornes incluses.

6. Pneumatique (10) selon l'une quelconque des revendications précédentes, dans lequel les filaments élémentaires constitutifs du brin multifilamentaire (56) en polyester sont retordus selon un facteur de torsion compris entre 65 et 240 bornes incluses, de préférence entre 90 et 150 bornes incluses.

7. Pneumatique (10) selon l'une quelconque des revendications précédentes, dans lequel le titre du brin multifilamentaire (54) en aramide est compris entre 100 et 400 tex bornes incluses, de préférence entre 140 et 210 tex bornes incluses.

8. Pneumatique (10) selon l'une quelconque des revendications précédentes, dans lequel le titre du brin multifilamentaire (56) en polyester est compris entre 100 et 500 tex bornes incluses, de préférence entre 100 et 170 tex bornes incluses.

9. Pneumatique (10) selon l'une quelconque des revendications précédentes, dans lequel le rapport du titre du brin multifilamentaire (54) en aramide sur le titre du brin multifilamentaire (56) en polyester est compris entre 0,2 et 4, de préférence entre 1 et 1,3.

10. Pneumatique (10) selon l'une quelconque des revendications précédentes, dans lequel la torsion du brin multifilamentaire (54) en aramide est comprise entre 250 et 450 tours par mètre bornes incluses, de préférence entre 340 et 420 tours par mètre bornes incluses.

11. Pneumatique (10) selon l'une quelconque des revendications précédentes, dans lequel la torsion du brin multifilamentaire (56) en polyester est comprise entre 250 et 450 tours par mètre bornes incluses, de préférence entre 340 et 420 tours par mètre bornes incluses.

**12.** Pneumatique (10) selon l'une quelconque des revendications précédentes, dans lequel l'élément de renfort (36) comprend un seul brin multifilamentaire (54) en aramide et un seul brin multifilamentaire (56) en polyester.

**13.** Pneumatique (10) selon l'une quelconque des revendications précédentes, dans lequel les brins multifilamentaires présentent sensiblement la même torsion.

**14.** Pneumatique (10) selon l'une quelconque des revendications précédentes, dans lequel chaque brin est enroulé en hélice autour de l'autre.

**Patentansprüche**

**1.** Reifen (10), der an ein ebenes Fahren angepasst ist, der mit selbsttragenden Flanken versehen ist, die eine Karkassenbewehrung (32) umfassen, **dadurch gekennzeichnet, dass** die Karkassenbewehrung (32) mindestens ein Verstärkungselement (36) umfasst, das mindestens einen Multifilamentstrang (54) aus Aramid und mindestens einen Multifilamentstrang (56) aus Polyester, die miteinander verdreht sind, umfasst.

**2.** Reifen (10) nach dem vorhergehenden Anspruch, wobei die Karkassenbewehrung (32) eine einzige Karkassenlage (34) umfasst.

**3.** Reifen (10) nach einem der vorhergehenden Ansprüche, der zwei Wülste (24) umfasst, die jeweils mindestens eine ringförmige Verstärkungsstruktur (26) umfassen, wobei die Karkassenbewehrung (32) in jedem der Wülste (24) durch ein Umdrehen um die ringförmige Verstärkungsstruktur (26) verankert ist.

**4.** Reifen (10) nach einem der vorhergehenden Ansprüche, der einen Flankeneinsatz (44) umfasst, der axial in dem Inneren der Karkassenbewehrung (32) angeordnet ist.

**5.** Reifen (10) nach einem der vorhergehenden Ansprüche, wobei die elementaren Filamente, die den Multifilamentstrang (54) aus Aramid bilden, gemäß einem Torsionsfaktor verdreht sind, der zwischen 65 und 240, Grenzwerte inbegriffen, bevorzugt zwischen 105 und 160, Grenzwerte inbegriffen, liegt.

**6.** Reifen (10) nach einem der vorhergehenden Ansprüche, wobei die elementaren Filamente, die den Multifilamentstrang (56) aus Polyester bilden, gemäß einem Torsionsfaktor verdreht sind, der zwischen 65 und 240, Grenzwerte inbegriffen, bevorzugt zwischen 90 und 150, Grenzwerte inbegriffen, liegt.

**7.** Reifen (10) nach einem der vorhergehenden Ansprüche, wobei der Titer des Multifilamentstrangs (54) aus Aramid zwischen 100 und 400 tex, Grenzwerte inbegriffen, bevorzugt zwischen 140 und 210 tex, Grenzwerte inbegriffen, liegt.

**8.** Reifen (10) nach einem der vorhergehenden Ansprüche, wobei der Titer des Multifilamentstrangs (56) aus Polyester zwischen 100 und 500 tex, Grenzwerte inbegriffen, bevorzugt zwischen 100 und 170 tex, Grenzwerte inbegriffen, liegt.

**9.** Reifen (10) nach einem der vorhergehenden Ansprüche, wobei das Verhältnis des Titers des Multifilamentstrangs (54) aus Aramid zu dem Titer des Multifilamentstrangs (56) aus Polyester zwischen 0,2 und 4, bevorzugt zwischen 1 und 1,3 beträgt.

**10.** Reifen (10) nach einem der vorhergehenden Ansprüche, wobei die Torsion des Multifilamentstrangs (54) aus Aramid zwischen 250 und 450 Windungen pro Meter, Grenzwerte inbegriffen, bevorzugt zwischen 340 und 420 Windungen pro Meter, Grenzwerte inbegriffen, liegt.

**11.** Reifen (10) nach einem der vorhergehenden Ansprüche, wobei die Torsion des Multifilamentstrangs (56) aus Polyester zwischen 250 und 450 Windungen pro Meter, Grenzwerte inbegriffen, bevorzugt zwischen 340 und 420 Windungen pro Meter, Grenzwerte inbegriffen, liegt.

**12.** Reifen (10) nach einem der vorhergehenden Ansprüche, wobei das Verstärkungselement (36) einen einzigen Multifilamentstrang (54) aus Aramid und einen einzigen Multifilamentstrang (56) aus Polyester umfasst.

13. Reifen (10) nach einem der vorhergehenden Ansprüche, wobei die Multifilamentstränge im Wesentlichen dieselbe Torsion aufweisen.

14. Reifen (10) nach einem der vorhergehenden Ansprüche, wobei jeder Strang spiralförmig um den anderen gewickelt ist.


**Claims**

1. Tyre (10) designed for running flat, provided with self-supporting sidewalls, comprising a carcass reinforcement (32), **characterized in that** the carcass reinforcement (32) comprises at least one reinforcing element (36) comprising at least one multifilament strand (54) made of aramid and at least one multifilament strand (56) made of polyester which are twisted together.

2. Tyre (10) according to the preceding claim, in which the carcass reinforcement (32) comprises a single carcass ply (34).

3. Tyre (10) according to any one of the preceding claims, comprising two beads (24) each one comprising at least one annular reinforcing structure (26), the carcass reinforcement (32) being anchored in each of the beads (24) by being turned up around the annular reinforcing structure (26).

4. Tyre (10) according to any one of the preceding claims, comprising a sidewall insert (44) positioned axially on the inside of the carcass reinforcement (32) .

5. Tyre (10) according to any one of the preceding claims, in which the elementary filaments of which the multifilament strand (54) made of aramid is composed are twisted with a twist factor of between 65 and 240, endpoints included, preferably between 105 and 160 endpoints included.

6. Tyre (10) according to any one of the preceding claims, in which the elementary filaments of which the multifilament strand (56) made of polyester is composed are twisted with a twist factor of between 65 and 240 endpoints included, preferably between 90 and 150 endpoints included.

7. Tyre (10) according to any one of the preceding claims, in which the thread count of the multifilament strand (54) made of aramid is comprised between 100 and 400 tex, endpoints included, preferably between 140 and 210 tex, endpoints included.

8. Tyre (10) according to any one of the preceding claims, in which the thread count of the multifilament strand (56) made of polyester is comprised between 100 and 500 tex, endpoints included, preferably between 100 and 170 tex, endpoints included.

9. Tyre (10) according to any one of the preceding claims, in which the ratio of the thread count of the multifilament strand (54) made of aramid to the thread count of the multifilament strand (56) made of polyester is comprised between 0.2 and 4, preferably between 1 and 1.3.

10. Tyre (10) according to any one of the preceding claims, in which the twist of the multifilament strand (54) made of aramid is comprised between 250 and 450 twists per metre, endpoints included, preferably between 340 and 420 twists per metre, endpoints included.

11. Tyre (10) according to any one of the preceding claims, in which the twist of the multifilament strand (56) made of polyester is comprised between 250 and 450 twists per metre, endpoints included, preferably between 340 and 420 twists per metre, endpoints included.

12. Tyre (10) according to any one of the preceding claims, in which the reinforcing element (36) comprises a single multifilament strand (54) made of aramid and a single multifilament strand (56) made of polyester.

13. Tyre (10) according to any one of the preceding claims, in which the multifilament strands have substantially the same twist.

**14.** Tyre (10) according to any one of the preceding claims, in which each strand is wound in a helix around the other.

**FIG. 1**

**FIG. 2**

**FIG. 4**

**FIG. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1745945 A
- WO 02096677 A